# EUROPEAN PATENT SPECIFICATION

(11) **EP 1 289 674 B1**
(45) Date of publication and mention of the grant of the patent: **06.05.2004**
(21) Application number: 01932410.2
(22) Date of filing: 18.05.2001
(51) Int. Cl.: B05C 1/14, B32B 15/08, B32B 31/00

(54) **Device and Method for Coating a Moving Metal Product Strip**
Vorrichtung und Verfahren zur Beschichtung eines laufenden Metallbandes
Dispositif et procédé pour enduire une bande métallique en mouvement

(30) Priority: 22.05.2000 NL 1015260
(43) Date of publication of application: 12.03.2003
(73) Proprietor: Corus Staal BV, 1970 CA Ijmuiden (NL)
(72) Inventor: BEENTJES, Petrus, Cornelis, Jozef, NL-1902 AA Castricum (NL)
(74) Representative: Hansen, Willem Joseph Maria
(86) International application number: PCT/NL2001/000381
(87) International publication number: WO 2001/089711

(56) References cited:
- EP-A- 0 326 919
- WO-A-95/29811
- WO-A-98/39160
- FR-A- 2 347 987
- US-A- 3 032 815

## Description

The invention relates firstly to a method for coating a moving metal product strip, in which coating material is brought into contact with this product strip, the product strip being brought to a temperature at which the coating material is made to adhere to the product strip while the former is being pressed onto the latter. In this context, the term metal product strip is understood as meaning a metal strip which is intended, after the application of a coating, to be processed and/or treated further as a product.

A method of this type is known, whereby the coating material consists of a film material, a paint or a lacquer. It is also known for a metal product strip to be coated on two sides.

A further method of this type is known, for example, from WO-A-95/29811 (corresponding to the preamble of claim 7.

In these known methods, the pressure is exerted by means of a roller. In the case of coating with a film, a web of this film is guided between the product strip to be coated (the substrate) and the pressure-exerting roller. As a result of this film being pressed onto the substrate, this film is heated and consequently adheres to the substrate.

In the case of two-sided coating, two webs of film are guided onto the substrate in a symmetrical configuration and are pressed onto the substrate by means of rollers.

The substrate, which is a metal strip, is generally obtained by rolling. This may lead to slight differences in thickness across the width of the metal strip (known as the crown). The crown of a steel strip may amount to approximately 2 to 4%. This means that a steel strip is 2 to 4% thicker in the centre than at the side edges. If the pressure-exerting rollers consist of a dimensionally rigid material, this may lead to the pressure distribution along the contact line along which the compressive force is transmitted being uneven. This may lead to local failure of the pressure-exerting rollers to come into contact with the substrate. This may in turn lead to air bubbles being included between the substrate and the film which has adhered to it, which represents a serious quality defect. To prevent this from happening, as a rule the pressure-exerting roller is provided with a rubber-like coating, so that the compressive force is better distributed.

However, this known method has serious drawbacks. The pressure-exerting roller with the rubber-like coating starts to approach the temperature of the heated film, so that there is a risk of the film material also adhering to this roller. It is not simple in technical terms for the surface of the rubber-like coating of the pressure-exerting roller to be cooled separately.

A further drawback is that the edge of the metal product strip (the substrate) damages the rubber-like coating of the roller, thus limiting the service life of the roller. This leads to high repair costs and production losses while the pressure-exerting roller is being changed. The service life of the rollers can be extended by systematically coating ever narrower metal product strip material. However, this means that it is necessary to limit the order of processing of the metal product strip material, which is often undesirable in operational terms. When processing extra-thin film material or film material with a low tear strength, problems caused by tearing or folding of the film material may arise in the known method. This also leads to serious disruptions or high rejection percentages.

The known method also has drawbacks in the coating of a substrate with a paint or lacquer.

When applying a paint based on a thermosetting polymer to the pressure-exerting roller with a rubber-like coating, the paint may adhere to the roller, since the rubber-like coating becomes too hot.

These and other drawbacks of the known method can be avoided by the use of the novel method according to the invention as defined in independent claim 7.

The invention therefore consists firstly in that, in the known method described in the preamble of said claim 7, furthermore the metal support strip is locally pressed towards the metal product strip within the virtually straight path, and means are provided, at the location where pressure is exerted, for equalizing the compressive force across the width of the metal support strip.

It has unexpectedly been found that the metal support strip according to this method, at the location where pressure is exerted, can completely follow the crown of the metal product strip if the metal support strip is pressed onto the product strip and the compressive force on the metal support strip is evened over its width. This is simplified by allowing the metal support strip to pass through a virtually straight path at the location where the pressure is exerted. This leads to the metal support strip, at the location where the pressure is exerted, having optimum bending flexibility. In this way, it is possible to obtain a coating of the metal product strip (the substrate) which is free of air bubbles.

According to the invention, the metal support strip is locally pressed towards the metal product strip with the aid of pressure-exerting means. Inclusions are prevented, partly by the pressure-exerting means. The intervention of the metal support strip prevents direct contact between the pressure-exerting means and the coating material.

To press the support strip towards the metal product strip, it is preferable to use a roller which is brought into contact with the metal support strip. This ensures that the compressive force is exerted locally across the width of the metal support strip. The intervention of the metal support strip prevents direct contact between the roller and the coating material.

Various means are conceivable for equalizing the compressive force across the width of the metal support strip. However, according to the invention, it is preferable for the means for equalizing the compressive force to comprise a coating of a rubber-like material on the roller and/or on that side of the metal support strip which faces towards the roller.

The metal support strip can be sufficiently cooled over its length to prevent the coating material from adhering to it. This support strip may itself be coated with a rubber-like material or a metal roller coated with rubber-like material is used. In both cases, the rubber-like coating can be sufficiently cooled.

In the case of a coated pressure-exerting roller, the latter is not in direct contact with the substrate, with the result that the rubber-like coating cannot be damaged by the edges of the substrate. This considerably increases the service life of the pressure-exerting roller, so that the availability of the installation used is increased. Therefore, production planning no longer has to take the width of the substrate to be coated into account.

When processing an extra-thin film material or a film material which is susceptible to tearing, this film material can be deposited on the metal support strip at an earlier stage, so that it is supported by this support strip up to the location where the adhesion to the substrate is to be brought about.

In one embodiment, the side of the support strip which bears the coating material is, within the virtually straight path, locally diverted and pressed onto the product strip, resulting in a bend being formed in the virtually straight path of the metal support strip, with the side that bears the coating material being situated on the outer side of the bend. This ensures that the product strip can pass through a straight path.

In one embodiment, the coating material is made to adhere to the product strip at the location where pressure is exerted while it is being pressed onto the product strip. This ensures that it is no longer necessary to maintain contact between the metal support strip and the coating material even virtually directly after the location where pressure is exerted.

This can be achieved by bringing the metal product strip to the said temperature before the metal support strip is pressed towards the metal product strip. By pressing the coating material onto the product strip, the coating material is heated and as a result adheres to the product strip. This ensures that the coating material adheres to the product strip and not to the support strip.

According to the invention, the novel method is also eminently suitable for coating the metal product strip (the substrate) on two sides, the application of a coating material to the second side being carried out in a similar way to the application to the first side, and the locations where pressure is exerted being situated symmetrically with respect to the product strip.

It has already been noted that the invention is eminently suitable for using film material as the coating material. In this case, according to the invention, preference is given to a coating material which comprises a polymer film. PET (polyethylene terephthalate) and polyolefins have been found to be particularly suitable base materials for this application.

The film material may be deposited on the metal support strip in various ways. For example, according to the invention the film may be formed by extruding a molten polymer mass onto the metal support strip via a casting die before this support strip runs through the path alongside the metal product strip (the substrate). However, according to the invention it is also quite possible firstly to extrude a film and then for this film to be stretched before being deposited on the metal support strip. The invention has made numerous variants for the coating of a substrate possible.

Apart from the option of forming a film first of all, according to the invention it is also possible for a solvent-free material selected from the group consisting of binders which cure to form a three-dimensional network to be extruded onto the metal support strip via a casting die before this support strip runs through the path alongside the metal product strip.

This material only cures to form a layer of paint which adheres to the substrate and comes off the metal support strip when this material is heated at the location where the pressure is exerted. The location of extrusion of the material may in this case be sufficiently far away from the location where pressure is exerted to avoid design and operational problems.

Obviously, according to the invention it is also possible for a different coating material to be applied to the two sides of the substrate, for example two different polymer films, different types of paint or a polymer film on one side and a paint on the other side.

The selection of coating material for coating a metal substrate is amply described in the specialist literature. For this reason, the coating materials which are suitable for the novel method are not described in further detail here.

It has already been noted that, with the method according to the novel invention, it is possible to prevent air bubbles from forming beneath the coating applied to the substrate. By virtue of the fact that the metal support strip is flexible and runs through a virtually straight path at the location where the pressure is exerted, the exertion of pressure by, for example, a rubber-coated roller can be sufficiently evened out, so that the metal support strip virtually completely follows the irregularities in the surface of the substrate. If this effect nevertheless proves insufficient, according to the invention it may furthermore be recommended for the metal support strip(s) together with the coating material, before being pressed towards the metal product strip, to be guided through a gas lock together with the metal product strip.

Depending on the roughness of the substrate, but especially if the substrate has pores or small scratches, air contained therein may be retained while the coating material is being pressed on. This may lead to the formation of gas bubbles in the finished product. If the gas lock comprises a vacuum chamber, air in pores or scratches has already been evacuated before the coating material is pressed on. This prevents the formation of air bubbles.

The introduction into and removal from a vacuum chamber and maintaining a vacuum may cause design and operational problems. As an alternative to maintaining a vacuum in the gas lock, according to the invention it has also proven successful for a helium atmosphere at a slight superatmospheric pressure to be maintained in the gas lock. If helium gas is included while coating material is being pressed onto a substrate, it has been found that helium can easily escape through the coating material by diffusion. Consequently, no bubbles are then formed beneath the coating layer on the substrate. By providing the helium atmosphere within the gas lock with a slight superatmospheric pressure, air is prevented from entering the gas lock.

It has already been noted that the metal support strip can be cooled more easily than a simple pressure-exerting roller. This is partly because of the larger cooling surface of this strip. Preferably, according to the invention, the metal support strip and the roller with a rubber-like coating are held at a temperature which lies below the temperature at which fixed adhesion of the coating material to the metal support strip occurs.

It is conceivable for the metal support strip to be unwound from a coil. However, according to the invention, preference is clearly given to a method in which the metal support strip is an endless strip which comprises thin stainless steel strip material. This strip can then be pressed on by a roller with a rubber-like coating. This roller may in turn preferably be supported by a driven and cooled steel support roller. The compressive force then does not cause the shaft of the pressure-exerting roller to bend.

According to the invention, favourable conditions for operation of the novel method are found if the metal support strip is held at a temperature between 10 and 120°C, the rubber-like coating has a hardness of between 50 and 90 SHORE A and the roller is pressed onto the metal support strip with a force of between 20 and 80 kg per cm of the contact line with the metal support strip.

It is especially preferred for the temperature in question to be held at between 30 and 75°C, the hardness in question is selected to be between 70 and 85 SHORE A and the compressive force is selected to be between 30 and 60 kg per cm of the contact line.

More particularly, the metal support strip should be held at a temperature at which the coating material cannot adhere to it or form a fixed bond with it. If the coating material is an organic material which is in an amorphous state or is a prepolymer which is thermosetting or UV-curing, the temperature of the metal support strip must remain below the glass transition temperature T_{g} of the coating material.

For example, when using PET (of which T_{g} = 75°C), this temperature must preferably remain at < 70°C. If the coating material is a (semi-)crystalline organic material, the temperature of the metal support strip must remain below the melting temperature Tₘ of the coating material. For example when using a polypropylene PP (of which Tₘ = 160°C), the temperature of the support strip should preferably remain at < 150°C.

However, the temperature of the coating material must still provide this coating material with the opportunity to adapt to the microroughness of the product strip, so that no air is included during the coating process. The coating material in this case serves to obtain "vacuum adhesion" to the product strip.

The minimum temperature required is a function of various factors, such as the chemical structure of the coating material, its thickness, the original temperature on application to the support strip and the heat content of this support strip.

If a coating material, for example a film, is too cold, this film cannot maintain sufficient contact with the metal support strip. This may cause the film to break or to folds being formed in the coating layer on the substrate.

As well as the novel method, the invention also relates to a novel device for coating a moving metal product strip, comprising a product course along which the metal product strip to be coated can be advanced (see again WO-A-95/29811, corresponding to the preamble of claim 1).

According to the invention as defined in independent claim 1, the known device according to the preamble of said claim 1 is further characterized in that it is provided with pressure-exerting means which are in contact with the support strip along its virtually straight path and locally press the support strip towards the product course, means for equalizing the compressive force across the width of the metal support strip being provided at the location where the pressure is exerted.

According to the invention, this novel device may also, on either side of the course of the metal product strip, be of double-sided design. Furthermore, this novel device may be provided with means for implementing one or more described embodiments of the method described above.

The invention will now be explained with reference to two figures.

Fig. 1 diagrammatically depicts a device for coating a substrate according to the invention.

Fig. 2 shows a variant of this device.

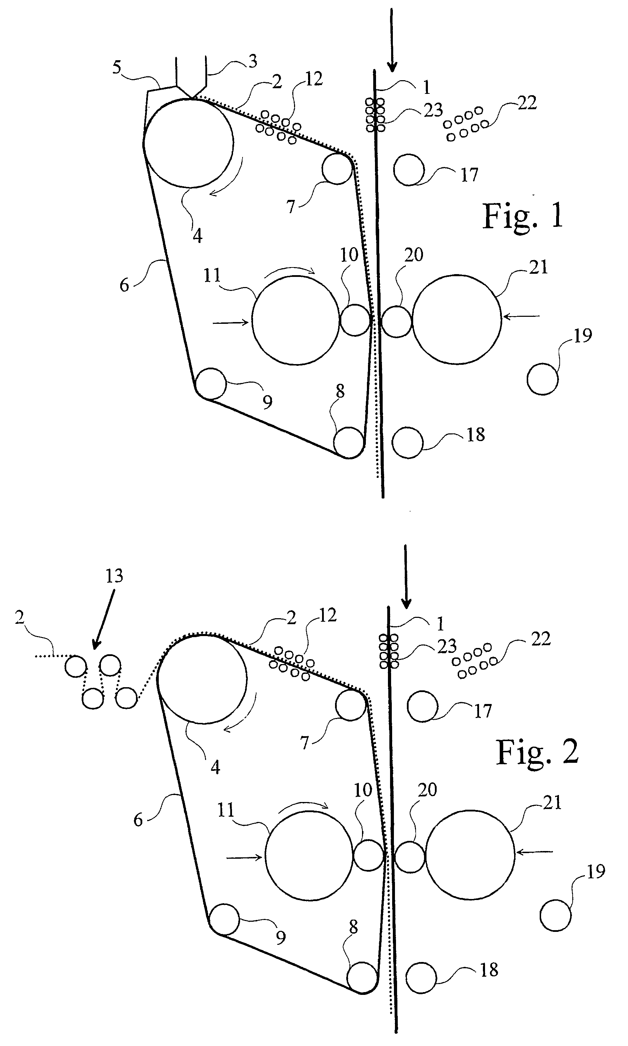

In Fig. 1, reference numeral 1 denotes a steel product strip which is to serve as a substrate for the application of coating material 2. Substrate 1 moves vertically downwards. An endless stainless steel strip 6 runs over a driven roller 4 and over guide rollers 7, 8 and 9.

If substrate 1 is being coated on two sides, the device may of symmetrical design. Guide rollers 17, 18 and 19 are also diagrammatically illustrated for this purpose.

In Fig. 1, a casting die 3 is positioned above the roller 4, and above the endless strip 6 which is guided over this roller and is driven thereby. If the casting die 3 is connected to an extruder (not shown), a molten polymer mass can be extruded out of the casting die 3, and this is formed into a film 2 on the endless strip 6. This film 2 is supported by strip 6 and as a result is not subjected to load or deformation while it is being transported on the strip 6.

Between guide rollers 7 and 8, strip 6 passes through a virtually straight path alongside the course of the substrate 1. About halfway along this path, strip 6 is pressed towards the substrate 1 by a roller 10 with a rubber-like coating. In the process, film 2 is pressed onto the substrate at this location. Substrate 1 is preheated by a furnace (not shown) to a temperature at which the film, under the pressure from roller 10, is made to adhere to the substrate 1.

Since the strip 6 is held at a temperature which lies below a temperature at which the plastic film 2 adheres to the stainless steel surface of the strip 6, this film 2 comes off the strip 6 after it has passed the roller 10.

Since strip 6 is pressed onto the substrate 1 in a virtually straight path and since strip 6 is a thin strip, it can readily follow the profile of the substrate 1, especially if the device is of double-sided design. This is further improved by the fact that roller 10 is provided with a rubber-like coating which evens the compressive force exerted by roller 10 across the width of the substrate 1. Roller 10 itself is supported and subjected to pressure by a heavy cooled steel roller 11, with the result that roller 10 itself is not subjected to flexural loads. It is preferable for roller 11 to be driven.

It should be noted that strip 6 may also be provided with a rubber-like coating on the rear side, as well as or instead of the rubber-like coating of the roller 10. The equalizing of the compressive force by the rubber-like coating ensures that no gas bubbles are formed beneath the coating on substrate 1. The point where substrate 1 and strip 6 together with the film 2 converge may be located within a vacuum cabinet or within a chamber with a hot superatmospheric pressure of helium gas. Gas locks 12, 22 and 23 are diagrammatically indicated for this purpose. The further construction of a vacuum cabinet or a chamber with superatmospheric helium gas pressure of this type forms part of conventional technology which has not been described in more detail here for the person skilled in the art.

To ensure uniform casting of a film at high speed, it may be important for a vacuum cabinet 5 to be positioned in the vicinity of the casting die.

It should be noted that a device in accordance with Fig. 1 can also be used, with little adaptation, to apply a layer of paint to the substrate 1. In this case, instead of a molten polymer a solvent-free material is extruded, which cures at elevated temperature to form a three-dimensional network. Instead of using an elevated temperature, it is also possible for this material to be cured by irradiating it with light of short wavelength (UV light) or with electrons (electron beam). The curing then takes place at the location of a reheating section after the as yet uncured coating has been applied to steel strip 1.

Fig. 2 shows a variant of the device shown in Fig. 1. In this variant, the film 2 is not cast onto the strip 6, but rather has already been prefabricated. The figure diagrammatically depicts a situation in which a film which has already been cast is guided through a stretching installation 13. The stretched film is then deposited on the strip 6 at the location of roller 4. Then, the treatment of the film takes place in the same way as in the case of a film which has been extruded as described in connection with Fig. 1.

## Claims

1. Device for coating a moving metal product strip (1) with a coating material (2), comprising a product course along which the metal product strip to be coated can be advanced, and means for bringing the metal product strip to a temperature at which the coating material is made to adhere to the metal product strip, whereby a metal support strip (6) is guided over a course over a drive roller (4) and a number of guide rollers (7, 8, 9), which course comprises a virtually straight path which runs alongside the product course, means being present for feeding the coating material to a part of the course of the metal support strip, **characterized in that** the device is provided with pressure-exerting means (10,11) which are in contact with the support strip along its virtually straight path and locally press the support strip towards the product course, and means for equalizing the compressive force across the width of the metal support strip being provided at the location where the pressure is exerted.

2. Device according to Claim 1, **characterized in that** the pressure-exerting means comprise a roller (10).

3. Device according to Claim 2, **characterized in that** the means (10) for equalizing the compressive force comprise a coating of a rubber-like material on the roller and/or on that side of the metal support strip which faces towards the roller.

4. Device according to one of the Claims 1 to 3 inclusive, **characterized in that** the means for bringing the metal product strip to be coated to a temperature at which the coating material is made to adhere to the metal product strip are located to pre-heat the metal product strip in a part of the product course upstream from the pressure-exerting means.

5. Device according to one of the Claims 1 to 4, **characterized in that** the means for bringing the metal product strip to be coated to a temperature at which the coating material is made to adhere to the metal product strip are provided by a furnace.

6. Device according to one of Claims 1 to 5 inclusive, **characterized in that** the device, on either side of the course of the metal product strip, is of double-sided design.

7. Method for coating a moving metal product strip (1), in which coating material (2) is brought into contact with this product strip, the product strip being brought to a temperature at which the coating material is made to adhere to the product strip while the former is being pressed onto the latter, a flexible metal support strip (6) is guided through a virtually straight path alongside this product strip at the same speed as the product strip, and the coating material is guided over the metal support strip until it is between the product strip and the support strip, **characterized in that** the metal support strip is locally pressed towards the metal product strip within the said path with the aid of pressure-exerting means (10, 11), and means (10,11) are provided, at the location where pressure is exerted, for equalizing the compressive force across the width of the metal support strip, by which means the compressive force on the metal support strip is equalized over its width.

8. Method according to Claim 7, **characterized in that** for exerting said pressure a roller is used, which roller is brought into contact with the metal support strip (10).

9. Method according to Claim 8, **characterized in that** the means for equalizing the compressive force comprise a coating of a rubber-like material on the roller (10) and/or on that side of the metal support strip (6) which faces towards the roller.

10. Method according to one of the preceding claims, **characterized in that** the side of the support strip (6) which bears the coating material (2) is, within the virtually straight path, locally diverted and pressed onto the product strip (1), resulting in a bend being formed in the virtually straight path of the metal support strip, with the side that bears the coating material being situated on the outer side of the bend.

11. Method according to one of the preceding claims, **characterized in that** the coating material is made to adhere to the product strip at the location where pressure is exerted while it is being pressed onto the product strip.

12. Method according to one of the preceding claims, **characterized in that** the metal product strip (1) is brought to the said temperature before the metal support strip (6) is pressed towards the metal product strip.

13. Method according to one of the preceding claims, **characterized in that** the metal product strip (1) is coated on two sides, the application of a coating material to the second side being carried out in a similar way to the application to the first side, and the locations where pressure is exerted being situated symmetrically with respect to the product strip.

14. Method according to one of Claims 7 to 13 inclusive, **characterized in that** the coating material (2), on at least one side of the metal product strip (1), comprises a solvent-free material selected from the group consisting of binders which cure to form a three-dimensional network, which material is extruded onto the metal support strip via a casting die (3) before this metal support strip (6) runs through the path alongside the metal product strip.

15. Method according to one of Claims 7 to 13 inclusive, **characterized in that** the coating material (2) comprises a polymer film on at least one side of the metal product strip (1).

16. Method according to Claim 15, **characterized in that** the each film is extruded onto the metal support strip (6) via a casting die (3) before the support strip runs through the path alongside the metal product strip (1).

17. Method according to Claim 15, **characterized in that** the each film is a stretched film which is guided onto the metal support strip (6) before the support strip runs through the path alongside the metal product strip (1).

18. Method according to one of the preceding claims, **characterized in that** the each metal support strip (6), together with the coating material (2) which is present thereon, before being pressed towards the metal product strip (1), is guided through a gas lock (12, 23) together with the metal product strip (1 ).

19. Method according to Claim 18, **characterized in that** the gas lock comprises a vacuum chamber.

20. Method according to Claim 19, **characterized in that** a helium atmosphere at superatmospheric pressure is maintained in the gas lock.

21. Method according to one of the preceding claims, **characterized in that** the metal support strip (6) used is an endless strip which comprises thin stainless steel strip material.

22. Method according to one of the preceding claims, **characterized in that** the metal support strip (6) is held at a temperature which lies below the temperature at which fixed adhesion of the coating material (2) to the metal support strip occurs.

23. Method according to one of Claims 8 to 22 inclusive, **characterized in that** the roller (10) is supported by a driven and cooled steel support roller (11).

24. Method according to one of Claims 9 to 23 inclusive, **characterized in that** the metal support strip (6) is held at a temperature between 10 and 120°C, **in that** the rubber-like coating has a hardness of between 50 and 90 SHORE A, and **in that** the roller (10) is pressed against the metal support strip with a force of between 20 and 80 kg per cm of the contact line with the metal support strip.

25. Method according to Claim 24, **characterized in that** the temperature in question is held between 30 and 75°C, **in that** the hardness in question is selected to be between 70 and 85 SHORE A, and **in that** the compressive force is selected to be between 30 and 60 kg per cm of the contact line.

26. Method according to Claim 24 or 25, **characterized in that** the metal support strip (6) is held at a temperature which lies below the glass transition temperature T_{g} of the coating material (2) if this material is in an amorphous state or below the melting point Tₘ if the coating material is (semi)-crystalline.

## Patentansprüche

1. Vorrichtung zur Beschichtung eines laufenden Metallproduktbandes (1) mit einem Beschichtungsmaterial (2), die einen Produktkurs aufweist, entlang dessen das zu beschichtende Metallproduktband vorgeschoben werden kann, und Mittel, um das Metallproduktband auf eine Temperatur zu bringen, bei welcher das Beschichtungsmaterial dazu gebracht wird, an dem Metallproduktband zu haften, wobei ein Metallstützband (6) über einen Kurs über eine Antriebswalze (4) und eine Anzahl von Führungswalzen (7, 8, 9) geführt wird, wobei der Kurs einen praktisch geraden Pfad aufweist, der neben dem Produktkurs verläuft, wobei Mittel anwesend sind, um das Beschichtungsmaterial zu einem Teil des Kurses des Metallproduktbandes zuzuführen, **dadurch gekennzeichnet, daß** die Vorrichtung mit Druck ausübenden Mitteln (10, 11) versehen ist, die mit dem Stützband entlang seines praktisch geraden Pfades in Kontakt stehen und das Stützband lokal zu dem Produktkurs drücken, und wobei Mittel zum Ausgleichen der Druckkraft über die Breite des Metallstützbandes an der Stelle vorgesehen sind, wo der Druck ausgeübt wird.

2. Vorrichtung nach Anspruch 1, **dadurch gekennzeichnet, daß** die Druck ausübenden Mittel eine Walze (10) aufweisen.

3. Vorrichtung nach Anspruch 2, **dadurch gekennzeichnet, daß** die Mittel (10) zum Ausgleichen der Druckkraft eine Beschichtung aus einem gummiartigen Material an der Walze und/oder an derjenigen Seite des Metallstützbandes aufweisen, die der Walze zugewandt ist.

4. Vorrichtung nach einem der Ansprüche 1 bis 3, **dadurch gekennzeichnet, daß** die Mittel, um das zu beschichtende Metallproduktband auf eine Temperatur zu bringen, bei welcher das Beschichtungsmaterial dazu gebracht wird, an dem Metallproduktband zu haften, so angeordnet sind, daß sie das Metallprodukt in einem Teil des Produktkurses vorwärmen, der oberhalb der Druck ausübenden Mittel liegt.

5. Vorrichtung nach einem der Ansprüche 1 bis 4, **dadurch gekennzeichnet, daß** die Mittel, um das zu beschichtende Metallproduktband auf eine Temperatur zu bringen, bei welcher das Beschichtungsmaterial dazu gebracht wird, an dem Metallproduktband zu haften, von einem Ofen vorgesehen sind.

6. Vorrichtung nach einem der Ansprüche 1 bis einschließlich 5, **dadurch gekennzeichnet, daß** die Vorrichtung an jeder Seite des Kurses des Metallproduktbandes ein doppelseitiges Design hat.

7. Verfahren zur Beschichtung eines sich bewegenden Metallproduktbandes (1), bei welchem Beschichtungsmaterial (2) mit diesem Produktband in Kontakt gebracht wird, wobei das Produktband auf eine Temperatur gebracht wird, bei welcher das Beschichtungsmaterial dazu gebracht wird, an dem Produktband zu haften, während ersteres auf letzteres gedrückt wird, ein flexibles Metallstützband (6) durch einen praktisch geraden Pfad neben diesem Produktband mit der gleichen Geschwindigkeit wie das Produktband geführt wird und das Beschichtungsmaterial über das Metallstützband geführt wird, bis es zwischen dem Produktband und dem Stützband ist, **dadurch gekennzeichnet, daß** das Metallstützband mit Hilfe von Druck ausübenden Mitteln (10, 11) lokal zu dem Metallproduktband innerhalb des Pfades gedrückt wird und Mittel (10, 11) an der Stelle vorgesehen sind, wo Druck ausgeübt wird, um die Druckkraft über die Breite des Metallstützbandes auszugleichen, durch welche Mittel die Druckkraft an dem Metallstützband über seine Breite ausgeglichen wird.

8. Verfahren nach Anspruch 7, **dadurch gekennzeichnet, daß** zum Ausüben des Drucks eine Walze verwendet wird, die mit dem Metallstützband (10) in Kontakt gebracht wird.

9. Verfahren nach Anspruch 8, **dadurch gekennzeichnet, daß** die Mittel zum Ausgleichen der Druckkraft eine Beschichtung aus einem gummiartigen Material an der Walze (10) und/oder an derjenigen Seite des Metallstützbandes (6) aufweisen, die der Walze zugewandt ist.

10. Verfahren nach einem der vorhergehenden Ansprüche, **dadurch gekennzeichnet, daß** die Seite des Stützbandes (6), die das Beschichtungsmaterial (2) trägt, innerhalb des praktisch geraden Pfades lokal umgeleitet und auf das Produktband (1) gedrückt wird, woraus sich ergibt, daß in dem praktisch geraden Pfad des Metallstützbandes eine Biegung gebildet wird, wobei die Seite, die das Beschichtungsmaterial trägt, an der Außenseite der Biegung liegt.

11. Verfahren nach einem der vorhergehenden Ansprüche, **dadurch gekennzeichnet, daß** das Beschichtungsmaterial an dem Produktband an der Stelle zum Haften gebracht wird, wo Druck ausgeübt wird, während es auf das Produktband gedrückt wird.

12. Verfahren nach einem der vorhergehenden Ansprüche, **dadurch gekennzeichnet, daß** das Metallproduktband (1) auf die Temperatur gebracht wird, bevor das Metallstützband (5) zu dem Metallproduktband gedrückt wird.

13. Verfahren nach einem der vorhergehenden Ansprüche, **dadurch gekennzeichnet, daß** das Metallproduktband (1) an zwei Seiten beschichtet wird, wobei das Aufbringen eines Beschichtungsmaterials auf die zweite Seite auf ähnliche Weise wie das Aufbringen auf die erste Seite durchgeführt wird und die Stellen, wo Druck ausgeübt wird, bezüglich des Produktbandes symmetrisch angeordnet sind.

14. Verfahren nach einem der Ansprüche 7 bis einschließlich 13, **dadurch gekennzeichnet, daß** das Beschichtungsmaterial (2) wenigstens an einer Seite des Metallproduktbandes (1) ein lösungsmittelfreies Material aufweist, das aus der Gruppe ausgewählt ist, die aus Bindemitteln besteht, die aushärten, um ein dreidimensionales Netzwerk zu bilden, wobei das Material auf das Metallstützband über eine Kokille (3) extrudiert wird, bevor dieses Metallstützband (6) durch den Pfad neben dem Metallproduktband läuft.

15. Verfahren nach einem der Ansprüche 7 bis einschließlich 13, **dadurch gekennzeichnet, daß** das Beschichtungsmaterial (2) eine Polymerfolie wenigstens an einer Seite des Metallproduktbandes (1) aufweist.

16. Verfahren nach Anspruch 15, **dadurch gekennzeichnet, daß** die Folie auf das Metallstützband (6) über eine Kokille (3) extrudiert wird, bevor das Stützband durch den Pfad neben dem Metallproduktband (1) läuft.

17. Verfahren nach Anspruch 15, **dadurch gekennzeichnet, daß** die Folie eine gestreckte Folie ist, die auf das Metallstützband (6) geführt wird, bevor das Stützband durch den Pfad neben dem Metallproduktband (1) läuft.

18. Verfahren nach einem der vorhergehenden Ansprüche, **dadurch gekennzeichnet, daß** das Metallstützband (6) zusammen mit dem darauf anwesenden Beschichtungsmaterial (2), bevor es zu dem Metallproduktband (1) gedrückt wird, zusammen mit dem Metallproduktband (1) durch eine Gasschleuse (12, 23) geführt wird.

19. Verfahren nach Anspruch 18, **dadurch gekennzeichnet, daß** die Gasschleuse eine Vakuumkammer aufweist.

20. Verfahren nach Anspruch 19, **dadurch gekennzeichnet, daß** eine Heliumatmosphäre unter Atmosphärenüberdruck in der Gasschleuse aufrechterhalten wird.

21. Verfahren nach einem der vorhergehenden Ansprüche, **dadurch gekennzeichnet, daß** das verwendete Metallstützband (6) ein Endlosband ist, das dünnes Bandmaterial aus rostfreiem Stahl aufweist.

22. Verfahren nach einem der vorhergehenden Ansprüche, **dadurch gekennzeichnet, daß** das Metallstützband (6) auf einer Temperatur gehalten wird, die unter der Temperatur liegt, bei welcher die fixierte Haftung des Beschichtungsmaterials (2) an dem Metallstützband auftritt.

23. Verfahren nach einem der Ansprüche 8 bis einschließlich 22, **dadurch gekennzeichnet, daß** die Walze (10) von einer angetriebenen und gekühlten Stahlstützwalze (11) gestützt wird.

24. Verfahren nach einem der Ansprüche 9 bis einschließlich 23, **dadurch gekennzeichnet, daß** das Metallstützband (6) auf einer Temperatur zwischen 10 und 120°C gehalten wird, daß die gummiartige Beschichtung eine Härte zwischen 50 und 90 Shore A hat, und daß die Walze (10) gegen das Metallstützband mit einer Kraft von zwischen 20 und 80 kg pro cm der Kontaktlinie mit dem Metallstützband gedrückt wird.

25. Verfahren nach Anspruch 24, **dadurch gekennzeichnet, daß** die fragliche Temperatur zwischen 30 und 75°C gehalten wird, daß die fragliche Härte so ausgewählt ist, daß sie zwischen 70 und 85 Shore A liegt, und daß die Druckkraft so ausgewählt ist, daß sie zwischen 30 und 60 kg pro cm der Kontaktlinie liegt.

26. Verfahren nach Anspruch 24 oder 25, **dadurch gekennzeichnet, daß** das Metallstützband (6) auf einer Temperatur gehalten wird, die unter der Glasübergangstemperatur T_{g} des Beschichtungsmaterials (2) bleibt, wenn dieses Material in einem amorphen Zustand ist, oder unter dem Schmelzpunkt Tₘ, wenn das Beschichtungsmaterial (halb)kristallin ist.

## Revendications

1. Dispositif pour revêtir une bande de produit métallique en mouvement (1) d'un matériau de revêtement (2), comprenant une trajectoire de produit le long de laquelle il est possible de faire avancer la bande de produit métallique à revêtir, et un moyen pour mettre la bande de produit métallique à une température à laquelle le matériau de revêtement adhère à la bande de produit métallique, une bande de support métallique (6) étant guidée sur une trajectoire sur un rouleau d'entraînement (4) et un certain nombre de rouleaux de guidage (7, 8, 9), laquelle trajectoire comprend un chemin pratiquement droit qui suit la trajectoire du produit, un moyen étant présent pour amener le matériau de revêtement sur une partie de la trajectoire de la bande de support métallique, **caractérisé en ce que** le dispositif est muni d'un moyen exerçant une pression (10, 11) qui est en contact avec la bande de support le long de son chemin pratiquement droit et qui presse localement la bande de support vers la trajectoire du produit, et un moyen pour égaliser la force de compression d'un bord à l'autre de la largeur de la bande de support métallique étant prévu à l'endroit où la pression est exercée.

2. Dispositif selon la revendication 1, **caractérisé en ce que** le moyen exerçant une pression comprend un rouleau (10).

3. Dispositif selon la revendication 2, **caractérisé en ce que** le moyen (10) servant à égaliser la force de compression comprend un revêtement en matériau de type caoutchouc sur le rouleau et/ou sur le côté de la bande de support métallique qui fait face au rouleau.

4. Dispositif selon l'une des revendications 1 à 3, **caractérisé en ce que** le moyen servant à mettre la bande de produit métallique à revêtir à une température à laquelle le matériau de revêtement adhère à la bande de produit métallique est placé de manière à préchauffer la bande de produit métallique dans une partie de la trajectoire du produit en amont du moyen exerçant une pression.

5. Dispositif selon l'une des revendications 1 à 4, **caractérisé en ce que** le moyen servant à mettre la bande de produit métallique à revêtir à une température à laquelle le matériau de revêtement adhère à la bande de produit métallique est constitué par un four.

6. Dispositif selon l'une des revendications 1 à 5, **caractérisé en ce que** le dispositif, de chaque côté de la trajectoire de la bande de produit métallique, présente un dessin à deux côtés.

7. Procédé pour revêtir une bande de produit métallique en mouvement (1), dans lequel un matériau de revêtement (2) est mis en contact avec cette bande de produit, la bande de produit étant mise à une température à laquelle le matériau de revêtement adhère à la bande de produit tandis que le premier est pressé sur cette dernière, une bande de support métallique flexible (6) étant guidée sur un chemin pratiquement droit à côté de cette bande de produit à la même vitesse que la bande de produit, et le matériau de revêtement est guidé sur la bande de support métallique jusqu'à ce qu'il soit entre la bande de produit et la bande de support, **caractérisé en ce que** la bande de support métallique est pressée localement vers la bande de produit métallique dans ledit chemin à l'aide d'un moyen exerçant une pression (10, 11), et un moyen (10, 11) est prévu, à l'endroit où la pression est exercée, pour égaliser la force de compression d'un bord à l'autre de la largeur de la bande de support métallique, moyen grâce auquel la force de compression exercée sur la bande de support métallique est égalisée sur toute sa largeur.

8. Procédé selon la revendication 7, **caractérisé en ce que** pour exercer ladite pression, on utilise un rouleau, lequel rouleau est mis en contact avec la bande de support métallique (10).

9. Procédé selon la revendication 8, **caractérisé en ce que** le moyen servant à égaliser la force de compression comprend un revêtement en matériau de type caoutchouc sur le rouleau (10) et/ou sur le côté de la bande de support métallique (6) qui fait face au rouleau.

10. Procédé selon l'une des revendications précédentes, **caractérisé en ce que** le côté de la bande de support (6) qui porte le matériau de revêtement (2) est, dans le chemin pratiquement droit, localement dévié et pressé sur la bande de produit (1), ce qui se traduit par la formation d'une courbure dans le chemin pratiquement droit de la bande de support métallique, le côté qui porte le matériau de revêtement étant situé sur le côté extérieur de la courbure.

11. Procédé selon l'une des revendications précédentes, **caractérisé en ce que** l'on fait adhérer le matériau de revêtement à la bande de produit à l'endroit où la pression est exercée pendant qu'il est pressé sur la bande de produit.

12. Procédé selon l'une des revendications précédentes, **caractérisé en ce que** la bande de produit métallique (1) est portée à ladite température avant que la bande de support métallique (6) soit pressée vers la bande de produit métallique.

13. Procédé selon l'une des revendications précédentes, **caractérisé en ce que** la bande de produit métallique (1) est revêtue sur deux côtés, l'application d'un matériau de revêtement sur le deuxième côté étant exécutée d'une manière similaire à l'application sur le premier côté, et les endroits où la pression est exercée étant symétriques par rapport à la bande de produit.

14. Procédé selon l'une des revendications 7 à 13, **caractérisé en ce que** le matériau de revêtement (2), au moins sur un côté de la bande de produit métallique (1), comprend un matériau sans solvant choisi dans l'ensemble comprenant les liants qui durcissent pour former un réseau tridimensionnel, lequel matériau est extrudé sur la bande de support métallique via une matrice de coulée (3) avant que cette bande de support métallique (6) suive le chemin à côté de la bande de produit métallique.

15. Procédé selon l'une des revendications 7 à 13, **caractérisé en ce que** le matériau de revêtement (2) comprend un film de polymère sur au moins un côté de la bande de produit métallique (1).

16. Procédé selon la revendication 15, **caractérisé en ce que** le film est extrudé sur la bande de support métallique (6) via une matrice de coulée (3) avant que la bande de support suive le chemin à côté de la bande de produit métallique (1).

17. Procédé selon la revendication 15, **caractérisé en ce que** le film est un film étiré qui est guidé sur la bande de support métallique (6) avant que la bande de support suive le chemin à côté de la bande de produit métallique (1).

18. Procédé selon l'une des revendications précédentes, **caractérisé en ce que** la bande de support métallique (6), avec le matériau de revêtement (2) qui est présent dessus, avant d'être pressée vers la bande de produit métallique (1), est guidée dans un bouchon de vapeur (12, 23) en même temps que la bande de produit métallique (1).

19. Procédé selon la revendication 18, **caractérisé en ce que** le bouchon de vapeur comprend une chambre à vide.

20. Procédé selon la revendication 19, **caractérisé en ce qu'**une atmosphère d'hélium à une pression superatmosphérique est maintenue dans le bouchon de vapeur.

21. Procédé selon l'une des revendications précédentes, **caractérisé en ce que** la bande de support métallique (6) utilisée est une bande sans fin qui comprend un matériau en bande mince d'acier inoxydable.

22. Procédé selon l'une des revendications précédentes, **caractérisé en ce que** la bande de support métallique (6) est maintenue à une température qui est inférieure à la température à laquelle se produit une adhésion fixe du matériau de revêtement (2) sur la bande de support métallique.

23. Procédé selon l'une des revendications 8 à 22, **caractérisé en ce que** le rouleau (10) est supporté par un rouleau de support en acier motorisé et refroidi (11).

24. Procédé selon l'une des revendications 9 à 23, **caractérisé en ce que** la bande de support métallique (6) est maintenue à une température comprise entre 10 et 120 °C, **en ce que** le revêtement de type caoutchouc présente une dureté comprise entre 50 et 90 SHORE A, et **en ce que** le rouleau (10) est pressé contre la bande de support métallique avec une force comprise entre 20 et 80 kg par cm de la ligne de contact avec la bande de support métallique.

25. Procédé selon la revendication 24, **caractérisé en ce que** la température en question est maintenue entre 30 et 75 °C, **en ce que** la dureté en question est choisie entre 70 et 85 SHORE A, et **en ce que** la force de compression est choisie entre 30 et 60 kg par cm de la ligne de contact.

26. Procédé selon la revendication 24 ou 25, **caractérisé en ce que** la bande de support métallique (6) est maintenue à une température inférieure à la température de transition vitreuse T_{g} du matériau de revêtement (2) si ce matériau est dans un état amorphe ou inférieure au point de fusion Tₘ si le matériau de revêtement est (semi)-cristallin.
